# EUROPEAN PATENT APPLICATION

(11) **EP 4 524 793 A1**
(43) Date of publication of application: **19.03.2025**
(21) Application number: 23315354.3
(22) Date of filing: 14.09.2023
(51) Int. Cl.: G06F 21/57, G06F 8/65

(54) **IMAGE LOADER SUPPORTING IMAGE ROLLBACK AND SELECTIVE ROLLBACK OF RELATED DATA**

(71) Applicant: THALES DIS FRANCE SAS, 92190 Meudon (FR)
(72) Inventor: Ferrari, Anthony, 83270 SAINT CYR SUR MER (FR)
(74) Representative: Bricks, Amélie

(57) **Abstract**

The invention relates to tamper resistant elements and, more particularly, to rollback of code operable on tamper resistant elements and selective rollback of data related to code images. The tamper resistant element according to the invention provides a mechanism for selectively retaining data from a previous version, rolling back data to a version of a program being rolled back to, or rolling back to an original version of the program.

## Description

### BACKGROUND OF THE INVENTION

The present invention relates, generally, to tamper resistant elements and, more particularly, to rollback of code operable on tamper resistant elements and selective rollback of data related to such code images.

Tamper resistant elements (TREs) are computerized devices that provide safeguards to protect programs and data stored thereon. Typically, a TRE is a stand-alone or embedded secure element or hardware security module that contains low-level hardware components and low-level software components that protect the TRE against logical and physical attacks. This security enables secure hosting of applications and confidential and cryptographic data associated with such hosted applications.

In the modern world, many machines that traditionally were electro-mechanical devices are now computerized. Furthermore, these devices are both interconnected and connected to servers that may provide software or firmware updates. The devices may be accessed over networks for performing actions, for reading sensor values, for performing transactions, etc. Thus, these networks are referred to as the Internet of Things (IoT) and, conversely, the devices deployed on such networks as loT devices.

It is crucial that such updates and other access to the devices are protected against both physical and logical attacks, e.g., unauthorized access to data or programs. Therefore, TRE devices may be used as or in IoT devices. TRE devices are described by Global Platform (globalplatform.org) and are also referred to as *tamper resistant secure hardware.* One type of TRE device is referred to, for example, by Global Platform, as a *secure element (SE),* which is a microprocessor chip that can store sensitive data and run secure applications. An SE may be a stand-alone device or embedded in another device, e.g., a mobile device. Through tamper protections, an SE protects its contents, e.g., sensitive data, programs, credentials, and cryptographic keys, against attacks, such as unauthorized appropriation.

Global Platform provides an image loader, the Open Firmware Loader described in for loading images, i.e., data container encapsulating firmware to be loaded onto a TRE (GlobalPlatform Technology, Open Firmware Loader for Tamper Resistant Secure Hardware Version 2.0 (globalplatform.com 2022, accessed August 24, 2023), the entire disclosure of which is incorporated herein by reference).

As the devices are deployed *in the field,* software and firmware updates may be performed *over the air,* i.e., by a server uploading firmware updates to device memory over a network, e.g., over the Internet. The uploaded firmware may be associated with some initial program data, may require some customization to data, and may have data updated during operation.

For a variety of reasons, e.g., discovery of bugs in a new version or discovery that a newer version of a program is incompatible with other installed programs, it may become desirable to *roll back* an program to an earlier version, i.e., a *roll back* is an operation in which a new version of a program is deactivated and an earlier version of the same program is re-activated. A rollback may apply to an application program or device control firmware.

Data associated with an application program may be delivered with preset default values, an issuer or user may further change these values and set values for data with no preset values, and during the course of use of an application program, the original data values may change to reflect changes in preference or in operational values. For example, consider a vehicle control software. When the vehicle is delivered, some operational parameters may be given default values for parameters that a vehicle owner may change at their option. For example, there may be a parameter that determines how doors are automatically locked, which may be preset to cause doors locked when the vehicle is put in gear. A vehicle owner may prefer doors to stay unlocked until the vehicle reaches a certain speed and they can, accordingly, change the door-lock parameter to make that change.

There are also data items that are locked to a particular version of a software program. An easy example is the programs version number.

Another type of data are data that a user is not allowed to change but that needs to be maintained at a current value. The vehicle-control software may also keep track of the vehicle mileage. Thus, when a new version of a program is loaded such data is not updated. Furthermore, during the operation of a version of a program, such data may acquire new values.

In rolling back an application program to an earlier version, in some case, data should revert to the original data of the first version, other data should retain values that the data has acquired during operation of the program, and some data should be given values associated with the version of the program that is being rolled back to.

From the foregoing it is apparent that there is a need for an improved method to selectively roll back data associated with programs being rolled back.

### SUMMARY

A preferred embodiment of the herein presented technology provides an improved method to selectively roll back data associated with programs being rolled back.

A tamper resistant element, as described herein, provides a powerful mechanism for selectively retaining data from a previous version, rolling back data to a version of a program being rolled back to, or rolling back to an original version of the program.

A preferred embodiment of a tamper resistant element includes a processor, a non-volatile programmable memory, connected to the processor, for storing code executable by the processor, at least a first code image (x), the first code image containing a first application and at least a first set of data having a data type attribute indicating a data type of the first set of data, data-setting instructions directing the processor to make changes to values stored in the first set of data, an image loader, comprising code executable by the processor. The image loader contains instructions to direct the processor to receive a first image update of the code image, loading the first code image update into the memory, deactivating the first code-image, and activating the first code image update. Upon receiving the first code image update, the instructions direct the processor to clone the first set of data and associating the cloned first set of data with the first code image update. Upon receiving a rollback command, the instruction direct the processor to perform a rollback of the first code image update to the first code image, wherein on rollback of a code image, data of the code image that is of a first data type is rolled back to a first state and data of the code image that is of a second data type is rolled back to a second state. The instruction direct the processor upon receiving the rollback command, to roll back the first code image update to the first code image by deactivating the first code image update and activating the first code image, to determine the data type attribute of the first set of data; and
when the data type attribute of the first set of data is of the first type, rollback the first set of data to the first state, and, when the data type attribute of the first set of data is of the second type, to rollback the first set of data to the second state.

In another aspect, the first state comprises original values of the first data set and the second state comprises values of the first data set subsequent to changes made to values of the first data set made by the data-setting instruction.

In another aspect, the first code image further comprises a plurality of second data sets each having a data type attribute indicating the data type of the each second data set, and wherein the image loader further comprises instructions to direct the processor to
upon receiving the first code image update of the code image, cloning each second data set and associating each cloned second data set with the first code image update, and
upon receiving the rollback command determine the data type attribute of each second set of data, and when the data type attribute of the each second set of data is of the first type, rollback the each second set of data to the first state, and when the data type attribute of the each second set of data is of the second type, rollback the each second set of data to the second state.

In another aspect, the image loader further contains instructions to receive a command to delete the first code image update and when receiving the command to delete, deleting the first code image update.

In yet another aspect, the instructions to receive a rollback command accepts a rollback command after cloning the first set of data upon receiving the first code image update.

In another aspect the instructions to receive a rollback command accepts a rollback command after at least one power cycle of the tamper resistant element subsequent to receiving a first code image update.

In another aspect, the tamper resistant element further has instructions directing the processor to permanently accept the first code image update and upon permanently accepting the first code image update, deleting the first code image, and declining any received rollback command.

In as aspect, the first code image of the tamper resistant element is firmware.

In an embodiment, the tamper resistant element is a secure element.

In an aspect, the herein presented technology is installed in a vehicle wherein the first code image comprises vehicle operation firmware.

### BRIEF DESCRIPTION OF THE DRAWINGS

FIG. 1 is an illustration of a network of devices that may be accessed over the Internet for sensor monitoring and device control.
FIG. 2 is an illustration of vehicle having a number of sensors and control mechanisms accessible via an loT devices, which may be a stand-alone unit or a component of some other computerized device, e.g., a vehicle control unit.
FIG. 3 is a high-level block diagram of high-level architecture of an loT device, for example, the vehicle-control loT device of FIG. 2.
FIG. 4 illustrates a progression of values for two parameters X₁ and X₂, respectively.
FIG. 5 is a block diagram illustrating update of a code image.
FIG. 6 is a schematic illustrating updates to parameter values associated with a code image.
FIG. 7 is a schematic illustrating two snapshots of a firmware before and after a rollback operation of a code image.
FIG. 8 is an example data attribute and value table with values for three parameters X1, X2, and X3 just before a rollback operation.
FIG. 9 is an illustration of a data attribute and value table of FIG. 8 after the rollback operation.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

The herein described technology provides for code image rollback with selective update of data associated with programs being rolled back in conjunction with the code image rollback. In an embodiment, data may be selectively retained from the version of a code image being rolled back, rolled back to the version to which the code image is being rolled back, or rolled back to an original version.

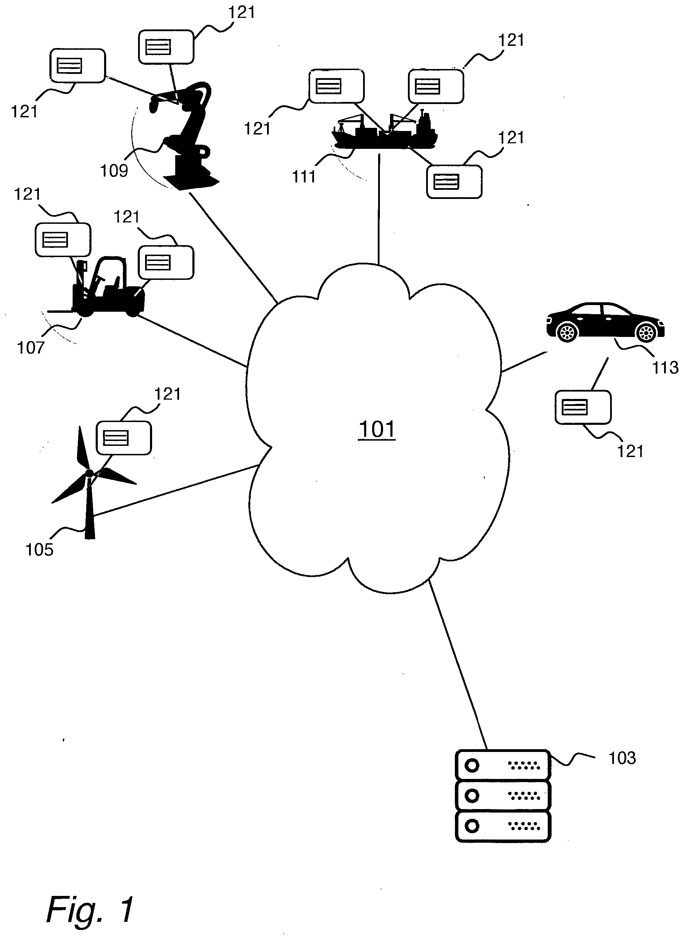

FIG. 1 is an illustration of a network of devices that may be accessed over the Internet for sensor monitoring and device control. A network 101, e.g., the Internet, may connect a server computer systems 103 to devices 121 deployed for many different purposes. The devices 121, collectively referred to herein as loT devices, may be deployed in energy production 105, warehouse operations 107, manufacturing automation 109, transportation 111, intelligent offices 113, homes, and in many other contexts. The loT devices may collect data about the operations in these many scenarios and may be used for controlling devices. For example, in the context of energy production, it may be interesting to remotely monitor energy generation for a particular generation unit, e.g., a windmill, and depending on operating conditions, it may be interesting to manipulate parameters controlling the operation of the energy generating unit. IoT devices are useful for both tasks.

Code images may be stored on the server computer 103 for uploading to the various IoT devices 121. The server computer 103 may also send control signals to the loT devices 121 to trigger rollback operations in which a version of a code image is deactivated in favor of an earlier version of the code image. For example, a rollback operation maybe performed when a bug or security breach is found in the newer version.

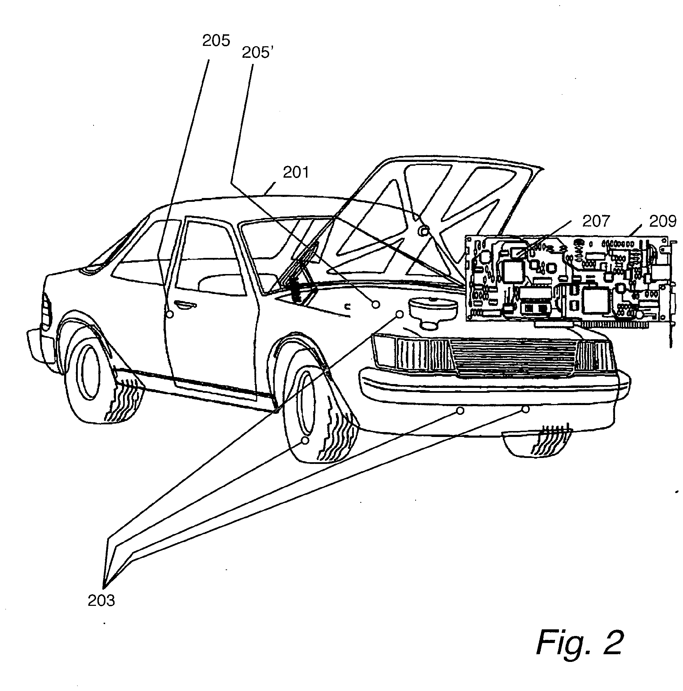

FIG. 2 is an illustration of vehicle 201 having a number of sensors 203 and control mechanisms 205 accessible via an loT devices 207, which may be a stand-alone unit or a component of some other computerized device, e.g., a vehicle control unit 209. The sensors 203 may, for example, be proximity sensors, velocity sensors, GPS devices, operational status sensors indicating, for example, engine performance data. The control mechanisms may be, for example, door lock actuators 205 or a controller 205' that enables or disables the ignition system of the vehicle 201.

Of course, the developers of such vehicle automation systems have an interest in protecting application programs deployed on the vehicle loT device 207 from being tampered with or being appropriated in some fashion. For example, attacks against a locking mechanism and a system that enables or disables a vehicle could enable an attacker to steal a vehicle or its contents. Furthermore, another concern is that with the inherent danger of operations of motor vehicles, malfeasance could result in property damage, and personal injury or death to motorists.

Similar threats are present in nearly all deployments of loT devices. For example, loT devices used in power delivery could be attacked to cause blackouts, loT devices used in industry could be attacked to cause supply chain disruptions, etc.

As may be appreciated by any owner or operator of a modern vehicle, many functions of the vehicle are computer controlled. These include engine management functions, transmission control software, security functions such as door locks, navigation software, and vehicle entertainment systems, just to mention a few.

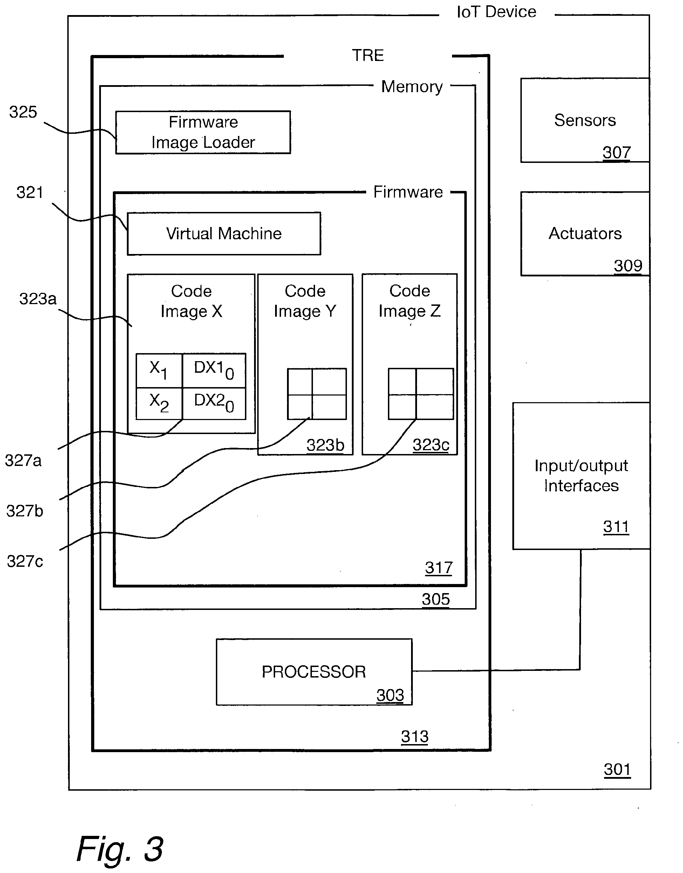

FIG. 3 is a high-level block diagram of high-level architecture of an loT device 301, for example, the vehicle-control loT device 207 illustrated in FIG. 2. It should be noted at the onset, FIG. 3 is just one possible architecture and that other designs for loT devices would benefit equally from the technology described herein.

The loT device 301 may include one or more on-board sensors 307 and actuators 309. However, often an loT device 301 accesses external sensors (not shown) and actuators (also not shown) as illustrated in FIG. 2. Such external sensors and actuators are accessed via one or more input/output interfaces 311, which could be wired connections, such as USB, a wireless connection, such as Bluetooth, WiFi, or NFC, or direct connection to the processor via GPIO, SPI, or I²C. An input/output interface 311 may also be used to access the network 101.

As noted hereinabove, security is usually very important in loT device implementations. Therefore, to provide a high-level of security against physical and logical attacks, the loT device 301 may be implemented using a tamper resistant element (TRE) 313 for processing and data storage components. The TRE 313 of the loT device 301 includes a processor 303 and a memory 305.

The processor 303 and memory 305, which may be multiple memory modules of different forms, e.g., RAM, NVM, and ROM, maybe co-located on one integrated circuit chip, referred to herein as *IoT chip* or *IoT IC.*

The memory 305 may include a firmware 317 that includes firmware images of one or more programs. These firmware images may include system software, e.g., a virtual machine 321, as well as, one or more application programs or apps stored as code images 323a-323c.

The firmware images 321 and 323 are loaded onto the firmware 317 using a firmware image loader 325. The firmware image loader 325 may, for example, be an implementation of the firmware loader described in GlobalPlatform Technology, Open Firmware Loader for Tamper Resistant Secure Hardware (Version 2.0) (GlobalPlatform January 2022; Document Reference: GPC_SPE_134 ("GPC_SPE_134"), which is hereby incorporated by reference in its entirety).

The code images 323a-323c may have some data items associated therewith stored, for example, in tables 327a-327c, respectively. As an illustration, the code image X 323a has at least two parameters X₁ and X₂, which each have a value associated therewith, illustrated as DX1₀ and DX2₀, respectively.

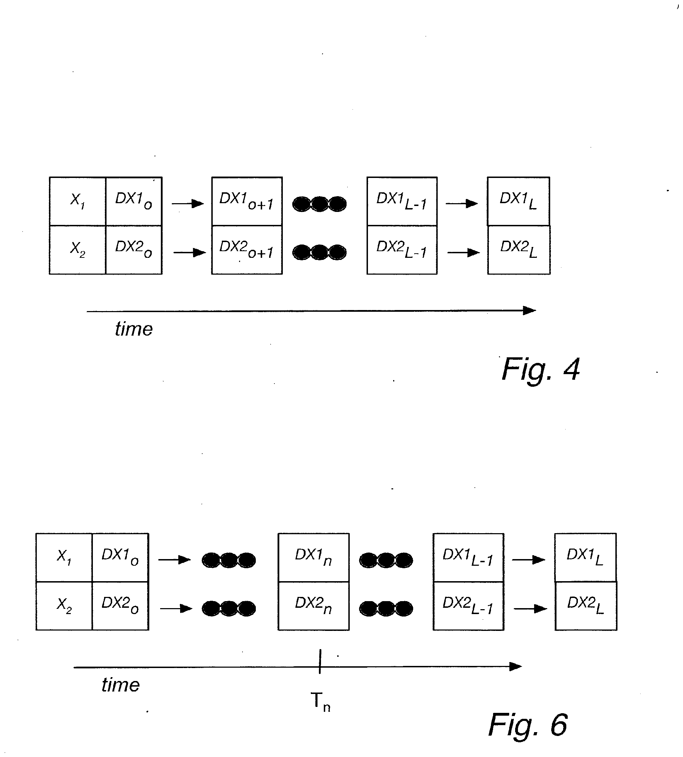

FIG. 4 illustrates a progression of values for parameters X₁ and X₂, respectively. Initially, e.g., upon being loaded, the parameter values for X₁ is assigned the value DX1₀ and X₂ is assigned the value DX2₀. During operation of the code image X, parameters X₁ and X₂ may acquire new values, e.g., first, DX1₀₊₁ and DX2₀₊₁, later to DX1_{L-1} and DX2_{L-1}, respectively, and to a most recent value set DX1_{L} and DX2_{L}, respectively.

Each code image has a code image identifier associated therewith. While these identifiers are illustrated herein as "Code Image X" etc., the identifier may be any mechanism for uniquely specifying a code image, e.g., an identifier such as specified in GPC_SPE_134 Section 2.3. The processor 303 invokes a code image using the code image identifier.

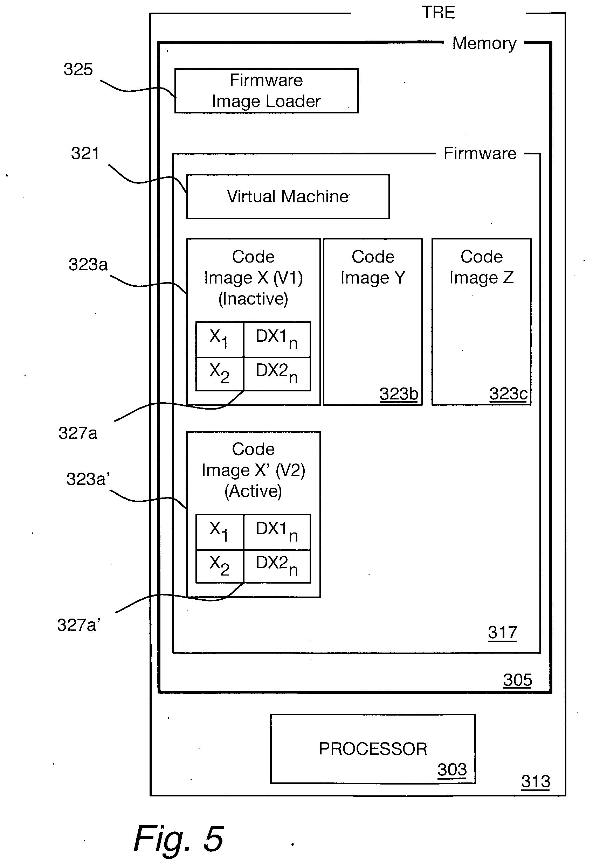

From time-to-time, a code image may be updated as illustrated in FIG. 5. The originally loaded version of Code Image X 323a (version V1) has been updated by replacing it with a newer version Code Image X (version V2) 323a'. The original version (V1) 323a is made *inactive* and the new code image version (V2) 323a' is made *active.* When the processor 303 invokes a program using the identifier "Code Image X", the currently active code image X, i.e., in FIG. 5, Code Image X (version V2) 323a' is invoked. Only one code image is active at one time. However, the inactive code images may be stored on the TRE 313 for archival purposes.

Consider that the data values 327a have been updated to X₁=DX1ₙ and X₂=DX2ₙ, respectively, when a code image is updated with a newer version, the data values 327a are cloned such that the active version of code image X, i.e., Code Image X (V2) 323a' have the current values, i.e., X₁=DX1ₙ and X₂=DX2ₙ, respectively. These values may, of course, be updated as the new version is being used as illustrated in FIG. 6, where DX1n and DX2n are the data values at the time cloning of the data for code image X.

Thus, updating a code image is a three-step process:
1. install, e.g., by the firmware image loader 325, an updated code image that may be addressed using the same code image identifier as a currently active code image
2. clone the data from the active code image into the corresponding data fields for the updated code image
3. make the current code image inactive and the updated code image active

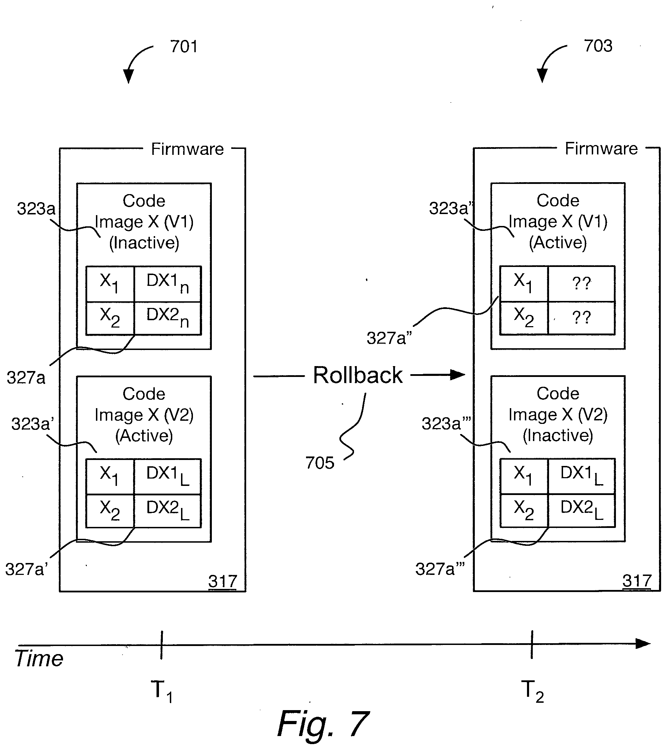

In FIG. 7 illustrates a rollback process 705 in which a code image is rolled back to an earlier version, e.g., from a later version V2 back to an earlier version V1. FIG. 7 illustrates two snapshots 701 and 703 of the firmware 317 that sequential in time to one another such that snapshot 703 follows snapshot 701 in time. In a general case, any number of previously loaded versions of a code image may be archived in the TRE memory 305. However, for practical purposes, for example, wherein memory space is limited, in an embodiment only one previous version is stored, which could be a code image that has proved to be stable and reliable.

Snapshot 701 illustrates that the archived version of Code Image X (V1) 323a, which is inactive as of time T₁ associated with snapshot 701 and the currently active version of Code Image X, namely Code Image X (V2) 323a', which is active as of time T₁ associated with snapshot 701. A rollback operation 705 causes rollback of code image X from version V2 back to version V1. Snapshot 703 is a snapshot of the firmware 317 following the rollback operation 705.

After the rollback operation 705, the code image X (V2) 323a‴ is made inactive and the code image X (V1) 323a" is restored to active state.

During rollback of a code image, data values for data associated with the code image must be addressed. For illustrative purposes, in FIG. 7, the data values for data items X1 and X2 associated with the active code image version 323a" after the rollback operation is designated with question marks (??) to indicate that the values should be determined as part of the rollback operation.

Since the time of activation of Code Image X' 323a', the data parameters X1 and X2 have been updated from values DX1ₙ and DX2ₙ to DX1_{L} and DX2_{L}, respectively. Conversely, prior to the activation of the later version data parameters X1 and X2 were updated from values DX1_{L} and DX2_{L} to DX1ₙ and DX2ₙ, respectively, i.e., as illustrated in FIG. 6.

There are several options for how to roll back data values. Consider FIG. 6. The value for X₁ originated with a value DX1₀, which may have been a preset value that the code image X1 was delivered with or an initial factory setting for the loT device. The value then evolved during execution of code image X1 (V1) to DX1ₙ, the value set by code image X1 (V1) at the update from V1 to V2, to DX1_{L}, the value just before the rollback operation. At least these three values are alternative values that the value for X₁ should be rolled back to in conjunction with the rollback operation 705.

In an embodiment, cloned data, i.e., data cloned from an earlier version when an update is installed, e.g., as illustrated in Fig. 5 wherein the data values for X1 and X2 from version V1 327a are copied into the corresponding parameters in version V2 327a', DX1ₙ and DX2ₙ, respectively. That cloned data is provided with an attribute to indicate whether, on rollback of the code image X, the value for the parameter should be restored to the value the parameter held at the update (value at Tn) or retain the value that was set using the updated version.

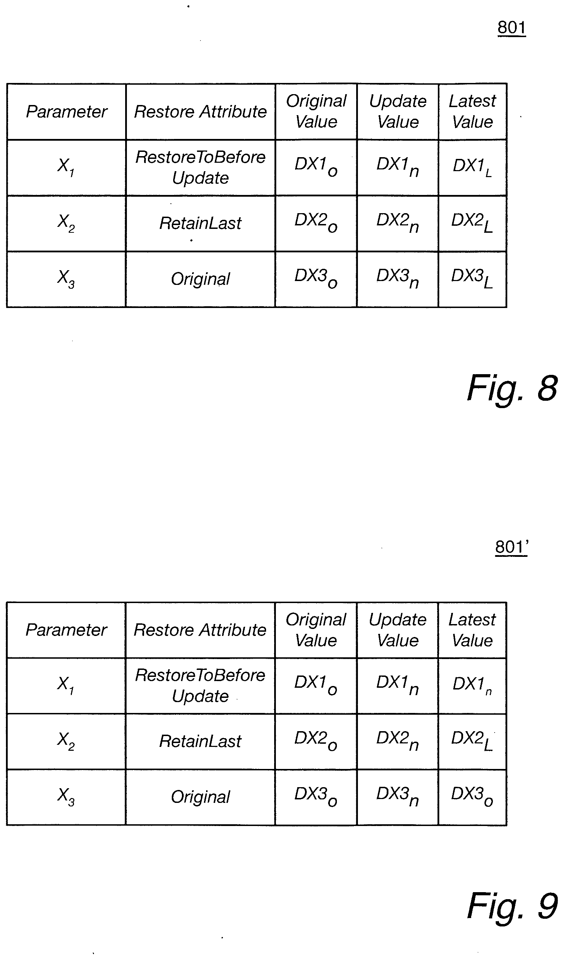

FIG. 8 is an example data attribute and value table 801 with values for three parameters X1, X2, and X3 just before a rollback operation. Three possible data restoration attribute values are illustrated: *RestoreToBeforeUpdate, RetainLast,* and *Original. RestoreToBeforeUpdate* calls for uncloning the value for the parameter to the value the parameter held just prior to the update, i.e., valueₙ, *RetainLast* calls for retaining the last value set by the version being rolled back from, i.e., value_{L}. and *Original* calls for restoring the very first value set on the original installation, i.e., valueₒ.

Consider, for example, a vehicle management system. One parameter may be the current odometer reading. That value should never be reset by a rollback operation as it indicates the distance the vehicle has been driven. Thus, in that case, the restoration attribute would be set to *RetainLast.* Similarly, another parameter may be a user-settable parameter such as when to automatically lock doors, e.g., when the vehicle is put in gear, when the vehicle obtains a certain speed, after a certain amount of time, or no automatic locking of doors. It may be appropriate for that parameter to retain the last value that the vehicle-operator had set as it would be annoying for the operator to discover that their setting had been rolled back to undesired values. Therefore, such a parameter would also have the *RetainLast* for the data restoration attribute. On the other hand, a rollback may be due to some software malfunction that requires a last-known correct value to be used. In such cases, it would be appropriate to restore the value prior to the update, i.e., the data restoration attribute would be set to *RestoreToBeforeUpdate.*

Thus, the version rollback operation contains the steps of:
1. Make the most recent version *inactive* and make the earlier version *active.*
2. For all data parameters:
   a. determine the data restoration attribute value for the parameter
   b. restore the parameter value according to the value of the data restoration attribute
3. (optionally) delete the version being rolled back from

FIG. 9 illustrated the data attribute and value table 801' after the rollback operation. Note that the last values for X1, X2, and X3 are set to DX1n, i.e., the value of X1 before the update, DX2L, i.e., the last value of X2 as set by the pre-rollback version of the code image X, and DX3o, i.e., the original value of X3, respectively.

In an aspect, the present invention provides for a code image loader, e.g., a firmware loader, that performs rollback operations of code images and selectively updates associated data values as described herein above.

From the foregoing it will be apparent that an efficient and secure mechanism for selectively setting data for various data values of loT firmware during code image rollback is provided.

Although specific embodiments of the invention have been described and illustrated, the invention is not to be limited to the specific forms or arrangements of parts so described and illustrated. The invention is limited only by the claims.

## Claims

1. A tamper resistant element (313) comprising:
a processor (303);
a non-volatile programmable memory (305), connected to the processor, for storing code executable by the processor:
at least a first code image (x), said first code image containing a first application and at least a first set of data having a data type attribute indicating a data type of the first set of data;
data-setting instructions directing the processor to make changes to values stored in the first set of data;
an image loader (325), comprising code executable by the processor, the image loader comprising instructions to direct the processor to:
receive a first image update (x') of the code image, loading the first code image update into the memory, deactivating the first code image, and activating the first code image update;
upon receiving the first code image update, clone the first set of data and associating the cloned first set of data with the first code image update (x');
receive a rollback command directing rollback of the first code image update (x') to the first code image (x), wherein on rollback of a code image, data of the code image that is of a first data type is rolled back to a first state and data of the code image that is of a second data type is rolled back to a second state;
upon receiving the rollback command:
roll back the first image update to the first code image by deactivating the first code image update and activating the first code image;
determine the data type attribute of the first set of data; and
when the data type attribute of the first set of data is of the first type, rollback the first set of data to the first state; and
when the data type attribute of the first set of data is of the second type, rollback the first set of data to the second state.

2. The tamper resistant element of claim 1 wherein the first state comprises original values of the first data set and the second state comprises values of the first data set subsequent to changes made to values of the first data set made by the data-setting instruction.

3. The tamper resistant element of claim 1 or 2 wherein the first code image further comprises a plurality of second data sets each having a data type attribute indicating the data type of the each second data set; and wherein the image loader further comprises instructions to direct the processor to:
upon receiving the first code image update of the code image, cloning each second data set and associating each cloned second data set with the first code image update; and
upon receiving the rollback command:
determine the data type attribute of each second set of data; and
when the data type attribute of the each second set of data is of the first type, rollback the each second set of data to the first state; and
when the data type attribute of the each second set of data is of the second type, rollback the each second set of data to the second state.

4. The tamper resistant element of any one of claims 1 to 3 wherein the image loader further comprises instructions to receive a command to delete the first code image update and when receiving the command to delete, deleting the first code image update.

5. The tamper resistant element of any one of claims 1 to 4 wherein the instructions to receive a rollback command accepts a rollback command after cloning the first set of data upon receiving the first code image update.

6. The tamper resistant element of any one of claims 1 to 5 wherein the instructions to receive a rollback command accepts a rollback command after at least one power cycle of the tamper resistant element subsequent to receiving a first code image update.

7. The tamper resistant element of any one of claims 1 to 6 further comprising instructions directing the processor to permanently accept the first code image update and upon permanently accepting the first code image update, deleting the first code image, and declining any received rollback command.

8. The tamper resistant element of any one of claims 1 to 7 wherein the first code image is firmware.

9. The tamper resistant element of any one of claims 1 to 8 wherein the tamper resistant element is a secure element.

10. A vehicle (201) comprising the tamper resistant element (313) of any of claims 1 through 9 and wherein the first code image comprises vehicle operation firmware.
